# EUROPEAN PATENT SPECIFICATION

(11) **EP 1 096 814 B1**
(45) Date of publication and mention of the grant of the patent: **16.08.2006**
(21) Application number: 99308388.0
(22) Date of filing: 25.10.1999
(51) Int. Cl.: H04Q 7/22

(54) **Radio communication network**
Funkkommunikationsnetz
Réseau de radiocommunication

(43) Date of publication of application: 02.05.2001
(73) Proprietor: LUCENT TECHNOLOGIES INC., Murray Hill, New Jersey 07974-0636 (US)
(72) Inventor: Chen, Xiaobao, Swindon Wiltshire SN5 7EP (GB); Chuah, Mooi Choo, Eatontown, Monmouth, NJ 07724 (US); Ford, Stephen Andrew, Chippenham, Wilts. SN15 3GF (GB)
(74) Representative: Williams, David John

(56) References cited:
- WO-A-97/36405
- WO-A-98/53576
- WO-A-99/48310
- "Digital cellular telecommunications system (Phase 2+);General Radio Packet Service (GPRS); Service description; Stage 2 (GSM 03.60 version 7.1.0 Release 1998)" EUROPEAN TELECOMMUNICATION STANDARD,ETSI EN 301 344 V7.1.0 ,August 1999 (1999-08), page COMPLETE XP002133982

## Description

This invention relates to radio communication networks.

General packet radio Service (GPRS) and its enhancement, enhanced GPRS (EGPRS), use a packet-mode transfer technique to provide high-speed and low-speed data services to mobile users based on the current GSM systems. Coupled with the development of wide band code division multiple access (WCDMA) technology to provide broadband radio access, universal mobile telecommunication system (UMTS) will provided packet data services based on the evolution from GPRS systems. In GPRS/UMTS, applications based on standard data protocols are supported, and inter-working is defined with internet protocol (IP) networks and X.25 networks. Although several quality of service (QoS) profiles are defined, the notion of service differentiation between the strict delay/bandwidth constraint services and the general delay-insensitive data transfer services is not supported in current GPRS specifications. This lack of clear service differentiation has been recognised to be problematic in meeting the ever-pushing need to use GPRS to support a wide variety of services with different QoS requirements.

One major problem in supporting QoS, and effectively, service differentiation, in GPRS is that current GPRS specifications do not support the co-existence of multiple flows/services for a subscriber. One single type of service is designated to a mobile station (MS) attached to the GPRS system with some pre-defined QoS profile. For example, a packet data protocol (PDP) context is created and associated one-to-one with an IP address of a MS. The PDP context defines the transmission information for the packets belonging to the same application. Consequently all packets to and from the MS will be treated in the same way (the GPRS QoS profile). This single-flow QoS provisioning model of GPRS is very restrictive in supporting a multimedia application which contains multiple media components and originates multiple flows of packets, each flow presenting different packet delivery requirements in terms of delay, throughput and packet loss.

In addition to the limitation of the single-flow QoS provisioning model, the media access control (MAC) protocol defined in GPRS does not provide distinction between different flows with different QoS requirements, in particular, there is no explicit support for real-time flows with bounded delay requirements. Moreover, admission control is not properly defined in GPRS.

There have been some proposals to expand the single-flow QoS provisioning model of GPRS by introducing multiple PDP sub-contexts (or secondary contexts) in addition to an original PDP context. Each sub-context has an associated QoS for a specific flow within a multimedia session. The packets belonging to the same flow whose transmission attributes are defined by its PDP sub-context are treated in the same way while the packets belonging to different flows with different PDP sub-contexts are treated distinctively so as to meet the different QoS requirements.

Several problems have been envisaged with this fine-grain QoS support model. The number of sub-contexts and subsequently the number of PDP sub-context activations increase in proportion to the number of media components as contained in multimedia session for an MS. This per-flow PDP will present a big concern in terms of control complexity and the number of PDP sub-contexts that need to be maintained and dynamically managed in the GPRS support nodes (GSNs) which may well form a many-to-many inter-connection networking pattern between serving GSNs (SGSNs) and gateway GSNs (GGSNs), each serving a large number of multimedia MSs. In addition, this fine-grain QoS notion may well be largely compromised at the IP layer and MAC layer where only a limited set of service differentiation is available. Finally it requires some substantial changes over current GPRS flow handling mechanisms such as PDP sub-Context (secondary PDP Context) Activation/Release. This will inevitably increase the control complexity.

The reader is directed to the following references:
EN 301 344 v6.4.0 (1999-08), "Digital cellular telecommunications systems (Phase 2+); General Packet Radio Service (GPRS); Service description; Stage 2 (GSM 03.60 version 6.4.0 Release 1997)
EN 301 349 v6.4.0 (1999-07), " Digital cellular telecommunications system (Phase 2+); General Packet Radio Service (GPRS); Mobile Station (MS) - Base Station System (BSS) interface; Radio Link Control Medium Access Control (RLC/MAC) protocol (GSM 04.60 version 6.4.0 Release 1997).
GSM 09.60 v6.3.0 (1999-04), "Digital cellular telecommunications system (Phase 2+); General Packet Radio Service (GPRS); GPRS Tunnelling Protocol (GTP) across the Gn and Gp interface; (GSM 09.60 version 6.3.0 Release 1997).
3G TR 23.907 1.3.0 (1999-05), "3^{rd} Generation Partnership Project; Technical Specification Group Services and System Aspects QoS Concept (3G TR 23.907 version 1.3.0).
3G TS 23.121 v3.0.0 (1999-07), 3^{rd} Generation Partnership Project; Technical Specification Group Services and Systems Aspects; Architectural Requirements for Release 1999 (3G TS 23.121 version 3.0.0)

The invention is based on the concept of service differentiation by a set of QoS Classes (or Service Classes) instead of on each micro-flow as proposed in GPRS. Moreover, to support the multimedia services with diverse QoS requirements, the concept of multiservice PDP (MPDP) and multiservice GPRS tunnelling procedure (MGTP) are introduced to exploit the current GPRS specifications and definitions as much as possible while minimising extra changes over current GPRS standards.

Against this background there is provided a method of radio communication in a radio communication network in which data flows in packets, in which a plurality of flows relating to a single mobile station are each allocated a respective one of a set of different qualities of service, the flows are grouped so that the flows in each group have the same allocated quality of service; flows in each group being sent to one or more queues in a logical link control layer, which queues provide forwarding treatment corresponding to the allocated quality of service of the group.

One embodiment of the invention will now be described, by way of example, with reference to the accompanying drawings, in which:
Figure 1 is a flow diagram showing the procedure for activating an MPDP
Figure 2 illustrates the fields I a modified QoS profile information element;
Figure 3 shows how GTP protocol data units (G_{_}PDUs) are dispatched through the MGTP;
Figure 4 shows how service is differentiated at the logical link control (LLC)/MAC layers for uplink traffic at the MS;
Figure 5 shows how service is differentiated for downlink traffic in the base station system (BSS);
Figure 6 shows how service is differentiated for uplink traffic in the BSS; and
Figure 7 illustrates a modified control fields format.

### The Service Differentiation QoS Framework for GPRS/UMTS

It is proposed that the QoS provision in GPRS/UMTS is based on the QoS Classes or Service Classes. A limited number of QoS Classes are identified and the appropriate and minimum number of parameters are selected and defined to describe each QoS Class. All current and future applications are expected to be fully described by one QoS Class or a combination of the QoS Classes and the network delivery behaviour for the information of the application is best described by the parameters of the selected QoS Classes.

As an example, the four QoS Classes (3GPP TR23.907) can be identified as the basic set of Service Classes based on which simple or complicated applications can be built up.
* Conversational Service Class,
* Streaming Service Class,
* Interactive Service Class,
* Background Service Class.

As a reference, the following parameters are may best characterise the above QoS Classes.
* Maximum Bit Rate
* Delivery order
* Maximum SDU Size
* SDU format information
* Reliability
* Transfer delay
   * Guaranteed Bit Rate
   * Burst Size
* Traffic handling priority
   * Allocation/Retention Priority

In the proposed QoS Framework, the multiple flows in a multimedia session are classified into the QoS Classes. A flow is identified by their corresponding QoS Class in those network functional elements/layers where Service Differentiation is performed. This means that flows of the same QoS Class will be treated the same way. Service Flows of different QoS Classes will be processed in different ways so as to maintain the service attributes as represented by the parameters of each QoS Class.

In GPRS, Service Differentiation is performed at the MS, radio access network (RAN) (enhanced RAN or ERAN for EGPRS), SGSN and GGSN. Service Differentiation operations including both signalling and data transmission procedures in GPRS are adapted, extended and modified where necessary. The changes on current GPRS standard specifications should be kept to minimum while an effective service differentiation is achieved.

As the basic building elements of the framework, MPDP Context and Multi-Service GTP adapted from the standard GPRS PDP Context and GTP Multi-Service Grouping are introduced to facilitate the achievement of service differentiation in GPRS networks.

A complete description of the GPRS QoS control procedures is not included herein. Only those concepts and definitions that have been changed will be presented with associated explanations.

### Multi-Service PDP Context

A Multi-Service PDP Context (MPDP) is derived from the standard GPRS PDP Context. A PTP (Point-to-Point) GPRS subscription contains the subscription of one or more PDP addresses. An individual PDP Context in the MS, the SGSN, and the GGSN describes each PDP address. A MPDP Context is generated for a subscription, which requests more than one QoS Classes. Please note that the number of flows is not necessarily equal to the number of QoS Classes. A subscription with more than one flow of the same QoS Class will activate a single-service PDP Context. A single-service PDP Context is taken as a special case of a MPDP Context.

In a MPDP Context, a set of Per-Class QoS Profiles is defined in replace of the QoS profile in the standard GPRS PDP Context. The maximum number of Per-Class QoS Profiles in a MPDP Context is decided by the number of the QoS Classes that have been identified. As an example, for a GPRS network which provides the four QoS Classes above, the maximum number of Per-Class QoS Profiles in a MPDP Context is four.

According to the Service Differentiation QoS Framework, the network service access point indicator (NSAPI) as contained in a MPDP Context is extended to be a set of NSAPIs, each of which corresponds to a specific QoS Class. Flows belonging to the same subscriber and having the same QoS Class will be multiplexed over the same type of NSAPI. The number of types of NSAPI is normally equal to the number of the QoS Classes that a user has subscribed for and wishes to activate at that moment.

The MPDP Contexts maintained by MS, SGSN and GGSN may be different. The differences are highlighted as follows.

For the MPDP Context at the MS, two sets of Per-Class QoS profiles are maintained. One set is the Requested Per-Class QoS Profile and the other is the Negotiated Per-Class QoS profile. A Requested Per-Class QoS profile may be degraded to a lower specification of the same QoS Class.

For the MPDP Context at the SGSN, three sets of Per-Class QoS profiles are maintained. One set is the Subscribed Per-Class QoS Profile, the second one is the Requested Per-Class QoS Profile and the third set is the Negotiated QoS Profile. A Negotiated Per-Class QoS Profile is normally no greater in its specifications than the Subscribed Per-Class QoS Profile and the Requested Per-Class QoS Profile unless the SP decides to do so.

For the MPDP Context at the GGSN, only the set of Negotiated Per-Class QoS Profiles is maintained.

The Radio Priority for the MPDP Contexts at the MS and the SGSN is extended to be a set of Radio Priorities, each of which maps to a certain QoS Class. The PDUs of the flows with the same QoS Class will be assigned the same level of Radio Priority.

The MPDP Context Activation/Modification/Deactivation procedures are similar to those of the standard GPRS PDP Context Activation/Modification/Deactivation.

As an example for a MPDP Context Activation process, a multimedia session management (SM) entity at the MS triggers Activate MPDP Context Request. The multimedia components to be included in the multimedia session will be grouped and classified into the number of the QoS Classes that are authorised to the subscriber. A change on the selected QoS Class such as addition/deletion of a QoS Class is achieved by using the MPDP Context Modification procedure. Addition/deletion of a media flow does not necessarily lead to the addition/deletion of a QoS Class.

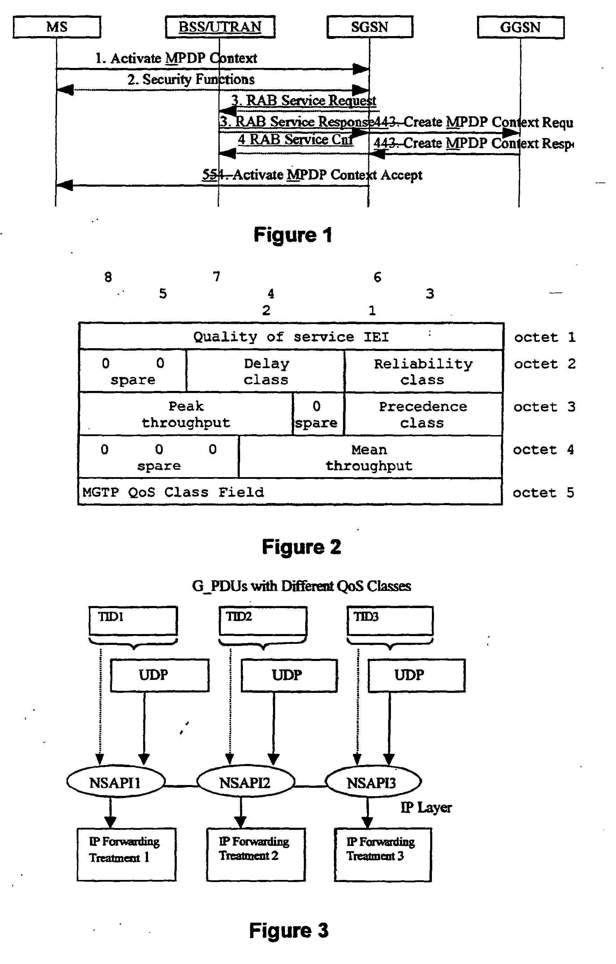

The PDP Context Activation procedure is illustrated in Figure 1. Each step is explained in the following list.
1) The MS sends a Multi-Service Activate PDP Context Request, a message containing NSAPI, TID, PDP Type, PDP Address, Access Point Name, QoS Requested, and PDP Configuration Options, to the SGSN. The MS uses the PDP Address to indicate whether it requires the use of a static PDP address or whether it requires the use of a dynamic PDP address. The MS leaves the PDP Address empty to request a dynamic PDP address. The MS uses the Access Point Name to select a reference point to a certain external network. The Access Point Name (APN) is a logical name referring to an external packet data network that the subscriber wishes to connect to. QoS Requested indicates the desired QoS profile. PDP Configuration Options may be used to request optional PDP parameters from the GGSN (see GSM 09.60). PDP Configuration Options is sent transparently through the SGSN.
2) Security functions may be executed.
3) The SGSN validates the Multi-Service Activate PDP Context Request using PDP Type (optional), PDP Address (optional), and Access Point Name (optional) provided by the MS and the PDP context subscription records.

If no GGSN address can be derived or if the SGSN has determined that the Activate PDP Context Request is not valid according to the its rules, then the SGSN rejects the PDP context activation request.

If a GGSN address can be derived, the SGSN creates a tunnel identifier (TID) for the requested PDP context by combining the international mobile subscriber identifier (IMSI) stored in the MM context with the NSAPI received from the MS. If the MS requests a dynamic address, then the SGSN lets a GGSN allocate the dynamic address. The SGSN may restrict the requested QoS attributes given its capabilities, the current load, and the subscribed QoS profile.

The (third generation) SGSN then sends a radio access bearer (RAB) Service Request to the UMTS terrestrial radio network (UTRAN). The request contains the IMSI, NSAPI, Flow label uplink for SGSN, SGSN IP address, and QoS negotiated. The UTRAN uses the Radio access bearer set up procedure to indicate to the mobile station or user equipment (UE), with RRC signalling, the new Bearer ID established and the corresponding NSAPI. The UTRAN replies with the RAB Service Response containing the IMSI; NSAPI, Flow label downlink for RNC, RNC IP address, and QoS negotiated. Note that the NSAPI is sufficient to indicate the QoS class. However, since the position of the Flow Label field within the GTP tunnel header makes it easier to manipulate, the Flow Label field can be used to indicate the QoS class, i.e. there is a one-to-one mapping between NSAPI and the Flow Label value.4) Only if there are sufficient radio resources will the SGSN send a Create MPDP Context Request message , containing PDP Type, PDP Address, Access Point Name, QoS Negotiated, TID, Selection Mode, and PDP Configuration Options, to the affected GGSN. The Access Point Name is the APN Network Identifier of the APN selected. The PDP Address is empty if a dynamic address is requested. The GGSN may use Access Point Name to find an external network. Selection Mode indicates whether a subscribed APN was selected, or whether a non-subscribed APN sent by MS or a non-subscribed APN chosen by SGSN was selected. The GGSN may use Selection Mode when deciding whether to accept or reject the PDP context activation. For example, if an APN requires subscription, then the GGSN is configured to accept only the PDP context activation that requests a subscribed APN as indicated by the SGSN with Selection Mode. The GGSN creates a new entry in its PDP context table and generates a Charging identity (Id). The new entry allows the GGSN to route PDP PDUs between the SGSN and the external PDP network, and to start charging. The GGSN may further restrict QoS Negotiated given its capabilities and the current load. The GGSN then retums a Create PDP Context Response message containing the TID, PDP Address, Reordering Required, PDP Configuration Options, QoS Negotiated, Charging Id, and Cause, to the SGSN. The PDP Address is included if the GGSN allocated a PDP address. Reordering Required indicates whether the SGSN shall reorder N-PDUs before delivering the N-PDUs to the MS. PDP Configuration Options contain optional PDP parameters that the GGSN may transfer to the MS. These optional PDP parameters may be requested by the MS in the Activate PDP Context Request message, or may be sent unsolicited by the GGSN. PDP Configuration Options is sent transparently through the SGSN. The Create PDP Context messages are sent over the GPRS backbone network.

Figure 2 shows the existing QoS Profile Information Element. It is proposed that an additional field called MGTP QoS class (1 byte) is added. The SGSN and GGSN will make use of the information stored in this field to mark the G_{_}PDUs with appropriate QoS classes.

Note also that the QoS Request, QoS Negotiated may contain two QoS Profile elements: one for uplink, one for downlink since it is likely that the traffic on the uplink and downlink is asymmetric with different QoS requirements.

### Multi-Service GTP

A Multi-Service GTP (MGTP) is derived from the standard GPRS GTP concept. A MGTP is defined both for the Gn interface, i.e. the interface between the GSNs (SGSN and GGSN) within a public land mobile network (PLMN), and the Gp interface between GSN's in different PLMNs. A MGTP tunnel is set up for use of a multimedia session between an MS across the GPRS network to the GGSN. A MGTP allows multiprotocol packets that bear different QoS requirements to be tunnelled through the GPRS backbone between GPRS Support Nodes (GSNs).

An MGTP includes both the signalling and data transfer procedures. In the signalling plane, GTP specifies a multi-service tunnel control and management protocol that allows the SGSN to provide a multimedia access for an MS to a GPRS network. Signalling is used to create modify and delete the multi-service tunnels.

In the transmission plane, an MGTP uses a multi-service tunnel to provide a service for carrying multimedia data packets. Two packets belonging to two different flows of the same QoS Class will have the same TID and thus will be experiencing the same tunnelling behaviour between the SGSN and the GGSN. Only those packets bearing different QoS Classes will be forwarded in different ways through the tunnel across the GPRS GSNs according the specifications corresponding to their individual QoS Classes. The exact forwarding behaviour is decided through Multi-Service Grouping which maps a QoS Class as indicated in the TID to a specific internet protocol (IP) layer packet forwarding behaviour, such as the differentiated service code points (DSCPs) corresponding to pre-defined per hop behaviours (PHB's), assured forwarding(AF), expedited forwarding (EF) or default forwarding (DF) in DiffServ.

The MGTP tunnel set-up, modification and deletion procedures are similar to the standard specifications of GPRS GTP, except that the TID for (GTP PDU) carries the QoS class that the current flow has been categorised into through the Multi-Service Grouping procedure. G_{_}PDUs with the same TID (the same QoS Class) are multiplexed over the same type of NSAPIs that provides a specific forwarding treatment to the G_{_}PDUs. The IP packets that encapsulate a G_{_}PDU bear some appropriate information in its header (e.g. the DS filed) which decide its forwarding behaviour across the GSN's. The IP packet forwarding information is mapped from the QoS Class included in the TID through the Multi-Service Grouping procedure.

In the signalling plane, the Create MPDP Context Request/Response messages, the Update MPDP Context Request/Response messages and the Delete MPDP Context Request/Response messages contain a set of Per-Class QoS Profiles and a set of Flow Label Data. The Per-Class QoS Profiles indicate the service classes and the tunnelling treatment of G_{_}PDUs while the Flow Label Data carry the specific QoS Class a G_{_}PDU belongs to and are mapped to a specific packet forwarding treatment at the IP Layer through the Multi-Service Grouping.

The concept of a MGTP tunnel extends the standard GPRS GTP tunnel in that a MGTP tunnel represents an aggregate of flows belonging to different QoS Classes. The tunnelling behaviour and the underlying IP packet forwarding treatment of each G_{_}PDU is decided by the QoS Class it belongs to. The QoS Class is contained in the TID carried in the header of G_{_}PDU.

Once a MPDP Context is activated and the corresponding MGTP tunnel is set up, a G_{_}PDU is assembled by encapsulating the PDU from the upper layer and attaching a GTP header with the TID specifically indicating the QoS Class which the G_{_}PDU belongs to. Corresponding to the TID, an appropriate NSAPI is selected though which the G_{_}PDU is dispatched down to the lower layer, e.g. the IP layer where an appropriate forwarding behaviour is selected for the IP packet carrying the G_{_}PDU.

Figure 3 illustrates an example of how the G_{_}PDUs of different QoS classes are tunnelled through the MGTP tunnel. G_{_}PDUs with different QoS classes will have different TIDs. Each NSAPI (and the corresponding Flow Label) represents a particular IP forwarding treatment at the IP layer corresponding to a QoS Class of G_{_}PDUs. For example, if the IP layer uses Differentiated Services for QoS provisioning, an IP packet that is used to encapsulate a G_{_}PDU packet has its DSCP (Differentiated Services Code Points) marked according to the mapping between the QoS Class of the G_{_}PDU and DSCP, and then dispatched through the NSAP that represents a Per-Hop Behaviour corresponding to the DSCP.

### Multi-Service Grouping Functions

Multi-Service Grouping function is a term used herein to mean classifying a traffic flow into an appropriate QoS Class, quantifying the corresponding parameters and mapping the QoS Classes between two adjacent functional layers such as the GTP/UDP layer and the IP layer. Multi-Service Grouping functions generally include the following procedures.

### Flow Classification:

A media component or flow in a multimedia session is classified into a specific QoS Class with the associated qualitative/quantitative parameters.

### QoS Partitioning:

The allocation of QoS budget corresponding the selected QoS Class over each network elements (MS, RAN/ERAN, SGSN/GGSNs)

### QoS Mapping:

The QoS Class is mapped to specific service class/priority levels at the network/MAC layer with the corresponding parameters translated.

Multi-Service Grouping function may also include traffic monitoring and policing to maintain the traffic pattern within the pre-defined (or negotiated) QoS_{_}Profile. For example, the bit rate of an incoming traffic flow must be limited within its registered peak rate. Any packet found to have exceeded the specification in the QoS_{_}Profile will be either shaped (queued for a longer delay) or dropped.

### Service Differentiation at MS/UE

The Service Differentiation functionality can be located at the teminal equipment (TE) from which an MPDP Context Activation Request is initiated in response to the set-up request of a multimedia session. During the session set-up, the MS/UE (MT) needs (TR 23.907) to perform the Multi-Service Grouping function to

Classify its media components into the corresponding QoS Class.

Decide the qualitative and/or quantitative QoS budget for each selected QoS Class

Map the QoS Classes and its parameters to the lower layer (LLC/MAC or RLC/MAC) QoS Classes and the corresponding parameters.

(optional) The MT may also need to monitor and police the traffic before it is injected into the network.

In addition to the Multi-Service Grouping, the Service Differentiation at the MS/UE also includes the control operations for MPDP Context Activation/MGTP Set-up as described above.

During the data transfer, the MS/UE (MT) marks each packet with its corresponding QoS Class and selects the matching NSAPI with the appropriate radio access bearer to dispatch the packet.

### Service Differentiation in GSN Nodes (SGSN/GGSN)

For Service Differentiation at SGSN/GGSN, Multi-Service Grouping needs to be performed before and during data transfer between SGSN and GGSN. A MS/UE initiated multimedia service request with the associated QoS Classes needs to be authorised according to the subscribed QoS_{_}Profiles. A multimedia service request from an authorised user will also need to go through the admission control performed by the Multi-Service Grouping at the SGSN and GGSN.

An authorised MS/UE that has been successfully admitted for access to the network will be assigned the necessary network resources e.g. memory, central processing unit (CPU), buffers for storing MPDP Context, transporting bearer data in the MGTP tunnel at the SGSN/GGSN.

For the uplink traffic, a packet that arrives at the SGSN will be encapsulated by a GTP tunnel header with appropriate Flow Label and TID marking. The TID (IMSI+NSAPI) is used to select the corresponding tunnel behaviour. Finally the G_{_}PDU is dispatched through the NSAPI and transferred through the MGTP tunnel to the GGSN. The SGSN may also need to perform Multi-Service Grouping function (monitoring/policing/shaping) during the data transfer so as to guarantee that the traffic behaviour conforms to the negotiated QoS_{_}Profile.

For the downlink traffic, a packet that arrives at the GGSN from the external network will go through the similar processing as demonstrated in Figure 2. The Multi-Service Grouping (monitoring/policing/shaping) is performed by the GGSN before a G_{_}PDU is dispatched to the lower network layer.

### Service Differentiation in ERAN

Service differentiation at the ERAN (EGPRS Radio Access Network) is to categorise the user data PDUs according to their specific QoS Classes and put them in the corresponding queues at the LLC layer and finally selects the right radio channels to send the MAC frames carrying the LLC PDUs from different LLC queues.

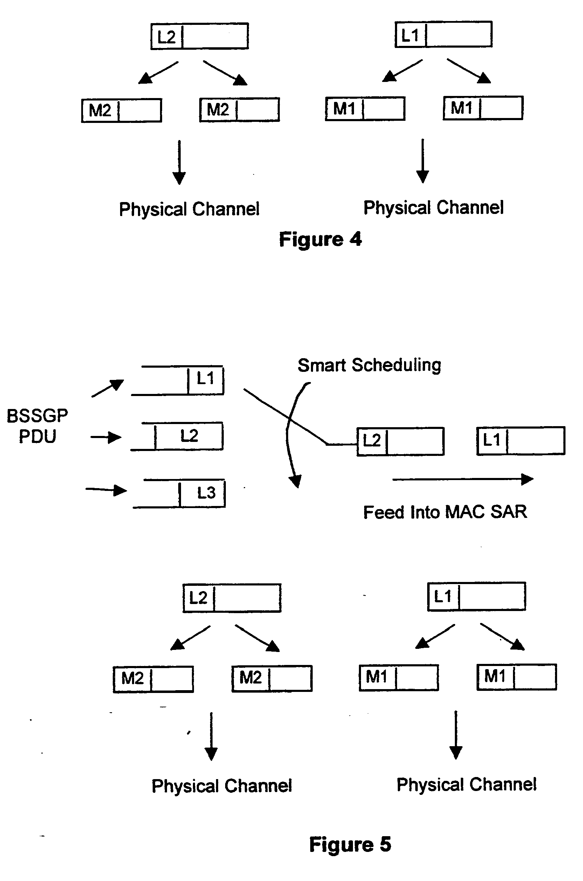

Figure 4 illustrates how different QoS classes can be supported at various layers at the MT. User data packets, e.g. point to point protocol (PPP) frames, are classified and marked with different QoS classes through the Multi-Service Grouping process.. Then they are packaged into LLC PDUs, each of which bears a LLC type that is mapped from the QoS Class of the packets and are placed into different queues that feature different media access priorities Vendor specific scheduling algorithms can be used to schedule dispatching of LLC PDUs in the different queues for the uplink transmissions. During the media access control, MT sends a packet resource request message specifying the LLC type. Upon hearing a radio uplink assignment message, MT can then fragment the LLC PDUs into appropriate RLC/MAC blocks and transmit them via the appropriate physical channels shown as M1 and M2 in Figure 3 .

Figure 5 illustrates the procedure taken by the BSS to ensure that the uplink base station system GPRS protocol (BSSGP) PDUs bearing different QoS can be achieved. The BSS reassembles LLC frames and put them into different queues based on the LLC type. Then, again vendor specific scheduling algorithms can be used to schedule the transmission of these LLC frames to the SGSN. These LLC frames are encapsulated and sent as BSSGP PDU packets.

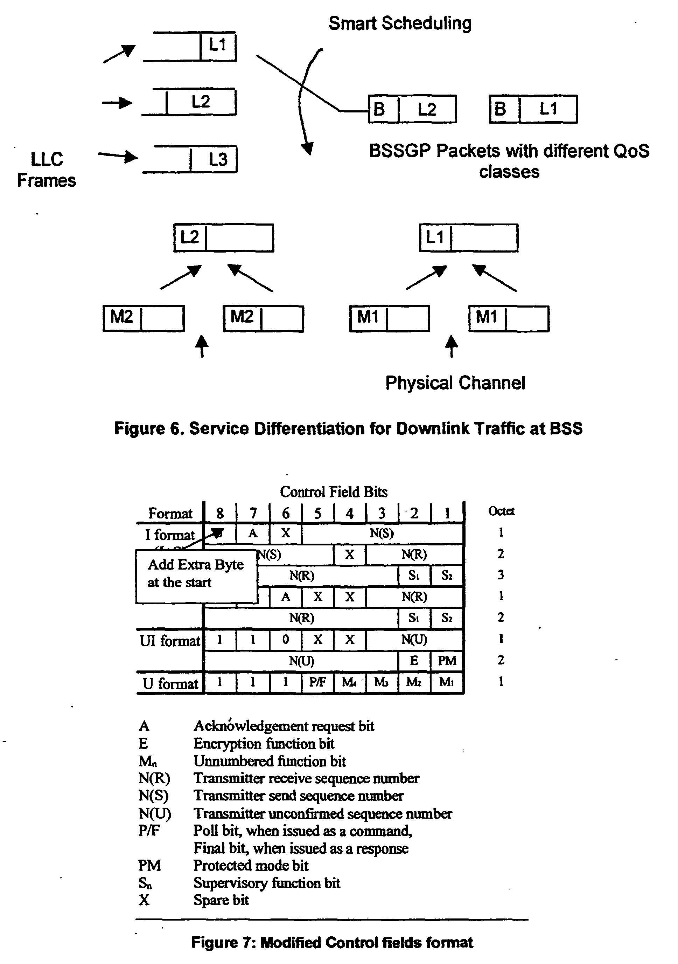

Similarly Figure 6 illustrates the procedure taken by the BSS to ensure the differentiation at the LLC/MAC layers for BSSGP PDUs with different QoS Classes for the downlink traffic.. BSSGP PDUs received by the BSS are decapsulated to reveal the LLC frame types and put in separate queues. Vendor specific downlink scheduling algorithms are used to transmit these LLC frames to the MAC Segmentation and Reassembly (SAR) sublayer where these LLC frames will be fragmented into different RLC/MAC blocks to be transmitted over different physical channels.

One of the possible way of enhancing the LLC headers to include QoS information is to add an extra byte to the control field (at the top) to indicate different LLC type as shown in Figure 7.

## Claims

1. A method of radio communication in a radio communication network in which data flows in packets, in which a plurality of flows (G-PDUs) relating to a single mobile station (MS/UE) are each allocated a respective one of a set of different qualities of service (QoS), the flows are grouped so that the flows in each group have the same allocated quality of service; flows in each group being sent to one or more queues in a logical link control layer (LLC/MAC), which queues provide forwarding treatment corresponding to the allocated quality of service (QoS) of the group.

## Patentansprüche

1. Verfahren zur Funkkommunikation in einem Funkkommunikationsnetz, in dem Daten in Paketen fließen, wobei einer Mehrzahl von Flüssen (G-PDUs) bezüglich einer einzelnen Mobilstation (MS/UE) jeweils eine entsprechende einer Menge von unterschiedlichen Dienstgüten (QoS - qualities of service) zugeteilt wird, die Flüsse so gruppiert sind, daß die Flüsse in jeder Gruppe die gleiche zugeteilte Dienstgüte aufweisen; wobei Flüsse in jeder Gruppe zu einer oder mehreren Warteschlangen in einer logischen Übertragungssteuerungsschicht (LLC/MAC - logical link control layer) gesendet werden, die Weiterleitungsbehandlung entsprechend der zugeteilten Dienstgüte (QoS) der Gruppe bereitstellen.

## Revendications

1. Procédé de radiocommunication dans un réseau de radiocommunication dans lequel se propagent des flux de données par paquets, dans lequel une pluralité de flux (G-PDU) se rapportant à une station mobile unique (MS/UE) se voient chacun attribuer l'une d'un ensemble de qualités de service (QoS) différentes, les flux sont groupés de telle sorte que la même qualité de service soit attribuée aux flux dans chaque groupe; une ou plusieurs files d'attente étant envoyées aux flux dans une couche de commande de liaison logique (LLC/MAC), lesquelles files d'attente assurent un traitement d'acheminement correspondant à la qualité de service (QoS) attribuée au groupe.
